# FASCICULE DE BREVET EUROPEEN

(11) **EP 0 776 158 B1**
(45) Date de publication et mention de la délivrance du brevet: **01.09.1999**
(21) Numéro de dépôt: 94917534.3
(22) Date de dépôt: 03.06.1994
(51) Int. Cl.: A01M 23/34, A01M 23/26

(54) **PIEGE POUR ANIMAUX**
TIERFALLE
ANIMAL TRAP

(43) Date de publication de la demande: 04.06.1997
(73) Titulaire: Belisle, Edouard, Sainte-Véronique, Québec JOW 1XO (CA)
(72) Inventeur: Belisle, Edouard, Sainte-Véronique, Québec JOW 1XO (CA)
(74) Mandataire: Desrousseaux, Grégoire Marie
(86) Numéro de dépôt international: CA9400308
(87) Numéro de publication internationale: WO9533376

(56) Documents cités:
- US-A- 4 823 504
- US-A- 5 109 627
- US-A- 5 157 863

## Description

### Domaine de l'invention

La présente invention a pour objet d'assurer de façon efficace, simple, solide et sûre la capture d'un animal en minimisant les risques de blessures.

### Brève description de l'état de la technique

De nombreux types de pièges visant à la capture d'animaux sont connus. Ils consistent notamment en des collets et des pièges à mâchoires.

Les mâchoires des pièges actuellement connus, lesquels sont principalement destinés aux mammifères, sont généralement pourvues de dents, ou présentent une section sensiblement pointue pour maintenir solidement une des pattes de l'animal. De plus, la pression exercée par ces mâchoires est toujours très forte. L'effet recherché avec ce type de piège est de blesser grièvement voire mortellement l'animal ainsi capturé. Les collets lancés trop rapidement peuvent également provoquer le même type de résultats.

Ces types de pièges ne permettent donc pas d'effectuer une chasse très sélective et les animaux ainsi piégés ne peuvent être relâchés, ceux-ci ayant subi des blessures trop sérieuses.

Ainsi peuvent être piégés et détruits des animaux domestiques ou protégés.

Le Demandeur a déjà proposé dans sa demande canadienne no. 2 083 299 du 1^{er} mars 1993, une solution à ce problème. Tout particulièrement, le Demandeur a réalisé un piège qui consiste à combiner un piège à mâchoire classique, dépourvu de dents ou de portions acérées et n'assurant pas une trop forte pression une fois les mâchoires refermées, avec un lacet disposé sous lesdites mâchoires. Ledit piège comprend un dispositif induisant l'ouverture des mâchoires lorsque l'animal capturé bouge le piège pour ainsi ne conserver que le lacet autour d'une de ses pattes. Ce type de piège bien que permettant de ne pas infliger de blessures trop graves à l'animal capturé, montre toutefois l'inconvénient de ne pas avoir une efficacité optimale du fait que le lacet n'est pas toujours bien positionné autour de la patte de l'animal capturé pour ainsi permettre l'évasion de l'animal. De plus, avec le piège décrit dans ladite demande de brevet canadien, il pouvait parfois être noté un enmêlage du lacet avec une ou plusieurs des pièces constitutives du piège, en particulier la portion des mâchoires coopérant avec les ressorts, pour ainsi provoquer un mauvais fonctionnement du piège et/ou empêcher le positionnement ou le serrage du lacet autour de la patte de l'animal capturé. Ce type d'emmêlement se produisant par exemple lorsque la patte de l'animal n'est pas positionnée au centre du piège.

Le Brevet US 5,109,627 décrit un piège pour animaux présentant une paire de bras arqués reliée par un câble flexible. Une plaque de serrage sur le cadre pivotant coopère avec le câble flexible pour serrer doucement la jambe de l'animal. La plaque de serrage est un organe présentant une grande surface munie d'une portion centrale concave qui se ferme doucement sur la patte de l'animal.

### Brève description de l'invention

La présente invention a pour objet un dispositif pour la capture d'un animal, ledit dispositif comprenant en combinaison:
- Un bâti.
- Une paire de mâchoires ayant des extrémités opposées et montées de façon pivotante au bâti. Chacune de ces mâchoires peut être déplacée entre une première position distincte et une seconde position distincte. La première position est définie lorsque les mâchoires sont à distance l'une de l'autre. La seconde position est définie lorsque les mâchoires sont soit l'une contre l'autre, soit contre la patte de l'animal à capturer.
- Des premiers moyens connectés aux mâchoires pour amener ces dernières l'une vers l'autre.
- Des seconds moyens pour retenir au moins l'une des mâchoires substantiellement en ladite première position.
- Des troisièmes moyens pour libérer la ou les mâchoires desdits seconds moyens.
- Un lacet ayant des extrémités opposées, l'une desdites extrémités étant solidaire de moyens de coulissement engagés par une portion intermédiaire du lacet pour former une boucle de serrage, l'autre extrémité du lacet étant à fixer à des moyens d'ancrage. La boucle de serrage est positionnée sous les mâchoires lorsque ces dernières sont en leur première position distincte.
- Des quatrièmes moyens pour déconnecter les premiers moyens des mâchoires et permettre à ces dernières de pouvoir librement se déplacer entre lesdites positions distinctes.

Ce dispositif de capture est caractérisé en ce qu'il comprend en outre des cinquièmes moyens pour guider la boucle de serrage depuis un endroit situé sous les mâchoires (lorsque lesdites mâchoires sont en leur première position) jusqu'en un point situé sur la patte de l'animal à capturer et au-delà desdites mâchoires (lorsque lesdites mâchoires sont en leur seconde position).

Avantageusement, ces cinquièmes moyens par leurs formes et leurs dimensions peuvent permettre d'une part de positionner correctement la boucle de serrage du lacet sur l'animal, et, d'autre part, de prévenir tout enmêlement accidentel de ladite boucle avec une ou plusieurs des mâchoires et/ou pièces du bâti et/ou mécanisme du piège. Cette caractéristique rend le piège objet de l'invention doté d'une très grande efficacité.

Suivant un aspect particulièrement préféré de l'invention, les cinquièmes moyens peuvent comprendre un élément permettant de guider et diriger temporairement la boucle de serrage. Avantageusement, les cinquièmes moyens peuvent définir un couloir avec au moins une des mâchoires, la boucle de serrage étant disposée en partie dans ledit couloir. Ce couloir va permettre de guider la boucle de serrage sur les mâchoires lors de la fermeture de ces dernières. Une fois sortie du couloir, la boucle de serrage va glisser sur lesdites mâchoires puis sur l'animal, notamment sur une patte de celui-ci. Ces cinquièmes moyens sont une manière simple et efficace de guider la boucle de serrage par dessus les mâchoires (lorsque ces dernières sont en leur seconde position) pour positionner ladite boucle sur la patte de l'animal qui, essayant de se dégager des mâchoires resserrera la boucle de serrage.

Suivant un autre aspect particulièrement préféré de l'invention, les cinquièmes moyens peuvent être solidaires d'au moins une mâchoire, et tout particulièrement d'une seule mâchoire. Ces cinquièmes moyens permettent le déplacement d'un même mouvement, d'au moins une des mâchoire et des moyens de guidage qui lui sont associés.

Suivant un autre aspect particulièrement préféré de l'invention, les cinquièmes moyens et la mâchoire peuvent former une seule pièce, ce qui permet d'accroître la solidité de l'association et, selon la nature des matériaux utilisés, de réduire le coût de fabrication.

Avantageusement, les cinquièmes moyens peuvent comprendre en outre des moyens de levage solidaires des premiers moyens.

Suivant un autre aspect particulièrement préféré, le bâti peut présenter une paire d'éléments chacun pourvu d'au moins une ouverture où sont positionnées les extrémités correspondantes des mâchoires et ainsi définir pour chaque mâchoire des pivots. Cette disposition particulière permet également de réduire les coûts de fabrication en simplifiant le dispositif. Avantageusement, chaque extrémité a une ouverture qui lui correspond. De préférence, l'ouverture peut être commune pour deux extrémités voisines.

Avantageusement, le lacet est constitué d'un fil ou d'un câble fait en un matériau flexible et ayant une grande résistance à la traction, comme par exemple un câble d'acier. De préférence, le matériau constitutif du fil ou câble n'a pas une trop grande flexibilité de sorte à pouvoir définir une boucle de serrage qui ne s'affaissera pas contre le sol lorsque positionnée sous les mâchoires et à pouvoir être positionnée sur la patte d'un animal tout en conservant substantiellement sa forme de boucle. Les câbles d'acier sont tout particulièrement bien adaptés pour une utilisation dans le cadre de l'invention pour leur solidité et pour leurs caractéristiques de flexibilité. Cependant toutes autres espèces de câbles, cordes ou filins comprenant les mêmes qualités intrinsèques peuvent être utilisées.

Suivant un autre aspect particulièrement préféré de l'invention, les mâchoires sont dépourvues d'aspérités et de dents, de manière à minimiser le risque de blessure chez l'animal et simplement temporairement maintenir la patte de l'animal en une position permettant le positionnement de la boucle de serrage autour de la patte de l'animal.

Avantageusement, les premiers moyens comprennent au moins un ressort de torsion possédant au moins une spire et deux branches distinctes. La première branche coopère avec un dispositif pour faire pivoter conjointement deux des extrémités appartenant à des mâchoires distinctes vers la seconde position. La seconde branche coopère avec un dispositif de retenue solidaire du bâti. Ces premiers moyens permettent d'assurer une fermeture efficaçe des mâchoires. De préférence, chacune des paires d'extrémités des mâchoires est associée à des premiers moyens correspondants.

Avantageusement, les quatrièmes moyens comprennent dans le dispositif de retenue solidaire au bâti et pour chacun des premiers moyens, un élément définissant avec le bâti une gorge pour recevoir la deuxième branche du ressort de torsion, ladite gorge ayant une ouverture suffisante pour permettre le passage latéral de ladite branche, et au moins un point d'appui pour permettre de faire latéralement pivoter par rapport audit point d'appui la branche jusqu'à ce qu'elle soit dégagée de ladite gorge. Ainsi lorsque l'animal en essayant de se dégager des mâchoires meut le bâti, il resserre le collet et exerce par contact d'une portion des ressort avec le sol un déplacement faisant pivoter la branche par rapport audit point d'appui de façon suffisante pour faire sortir la branche du ressort de la gorge et ainsi rendre les mâchoires libres de se déplacer entre lesdites positions distinctes et par conséquent faire en sorte que l'animal reste uniquement prisonnier du lacet.

Suivant un autre aspect tout particulièrement préféré de l'invention, les moyens pour retenir les mâchoires comprennent un logement situé dans le bâti et à l'intérieur duquel vient se loger une portion d'une des mâchoires (lorsqu'elle se trouve dans la première position). Ledit logement est obturé par une détente montée de façon pivotante au bâti, ladite détente pouvant adopter deux positions distinctes, l'une desdites positions étant une position fermée obturant le logement et l'autre desdites positions étant une position ouverte permettant le dégagement de la mâchoire. La détente est retenue en position fermée par un élément monté de façon pivotante au bâti. Cet élément comprend des extrémités opposées, l'une desdites extrémités définissant une butée pour retenir la détente en sa position fermée, l'autre de ces extrémités comprenant un levier sur lequel l'animal à capturer peut agir pour faire pivoter l'élément, déplacer la butée et libérer la détente.

Avantageusement, les cinquièmes moyens pour guider la boucle de serrage ne définissent un couloir qu'avec l'autre des mâchoires, c'est-à-dire la mâchoire qui n'est pas retenue dans le logement obturé par la détente.

### Brève description des dessins

Les dessins joints à la divulgation présentent des modes de réalisation particulièrement préférés de l'invention.
La figure 1 est une vue en perspective d'un mode de réalisation particulièrement préféré de l'invention, le dispositif de capture étant disposé armé, c'est-à-dire les mâchoires ouvertes et sous tension.
   Pour rendre la compréhension des divers constituants du piège plus aisée, le lacet, élément essentiel de l'invention, n'a pas été représenté dans les figures 2, 3, 4, 5 et 6.
La figure 2 est une vue de dessus du dispositif de la figure 1, et présente une manière préférée d'ouvrir les mâchoires.
La figure 3 est une vue en perspective du même dispositif que celui de la figure 1, un des ressort n'étant pas comprimé.
La figure 4 est une vue en perspective du même dispositif que celui de la figure 1, les deux ressorts étant comprimés.
La figure 5 est une vue de profil du dispositif de la figure 1, et montre une manière d'armer les mâchoires.
La figure 6 présente une disposition possible du piège par rapport à un appât.
La figure 7 est une vue de profil du dispositif de la figure 1, en action autour de la patte d'un animal.
La figure 8 est une vue de dessus et en coupe d'une disposition particulière du dispositif de la figure 1 dans laquelle le lacet est fixé à un arbre.
La figure 9 est une vue d'un autre mode de réalisation préféré de l'invention, le lacet étant positionné d'une manière particulière.

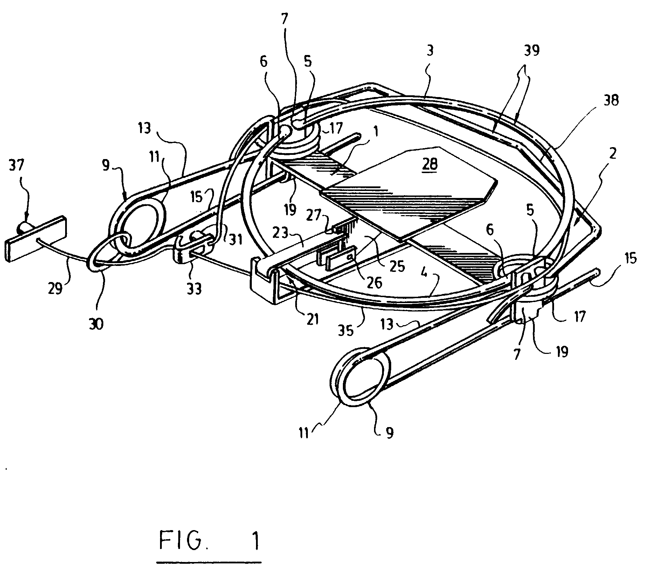

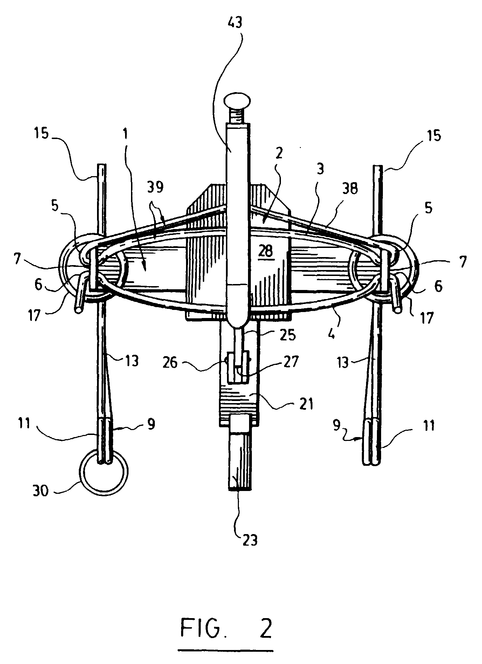

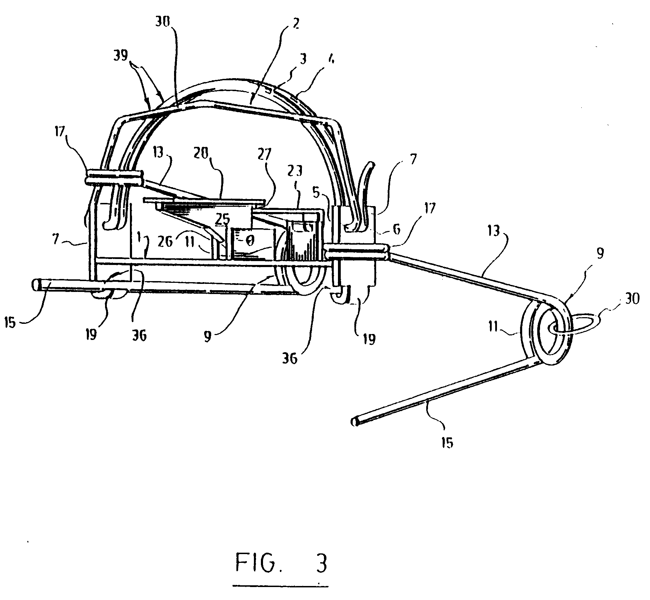

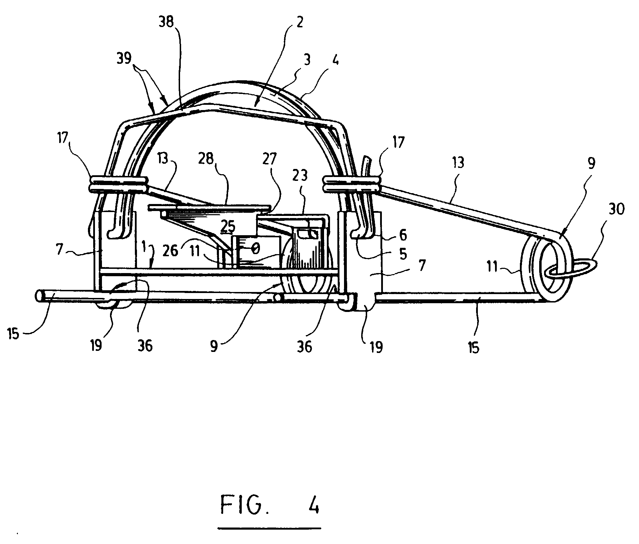

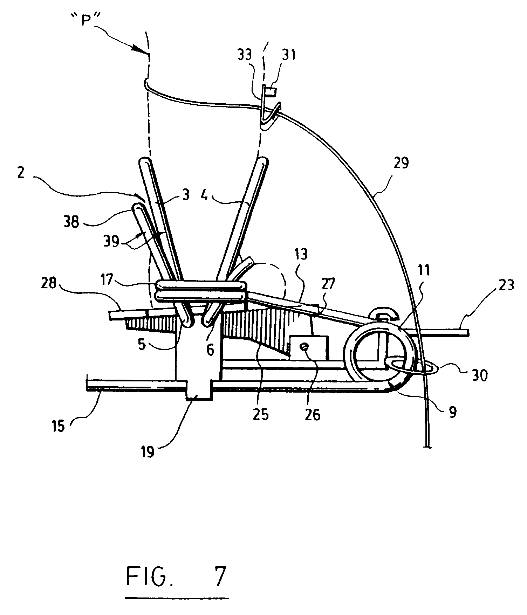

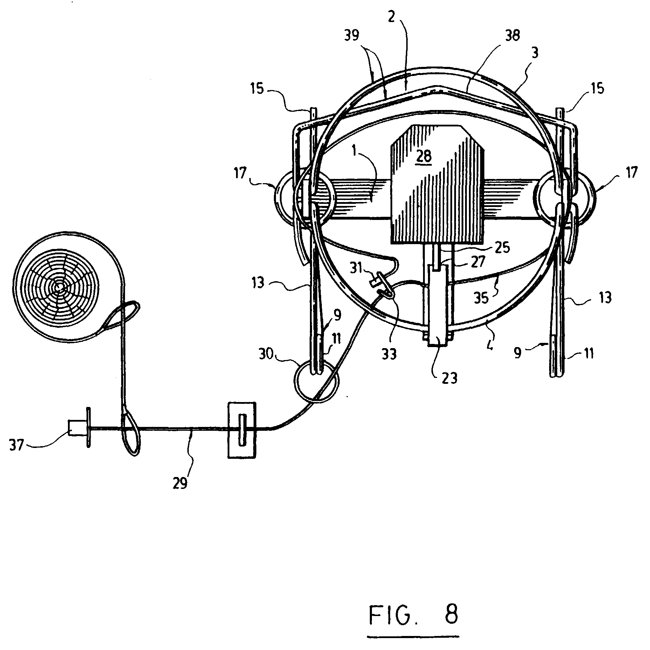

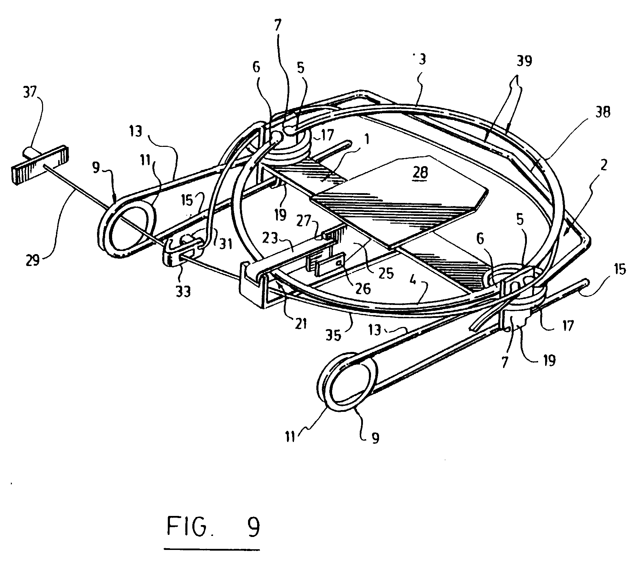

Un mode de réalisation tout particulièrement préféré du dispositif de capture selon l'invention est représenté aux Figures 1 à 8. Ce dispositif comprend en combinaison:
- Un bâti (1) qui présente de préférence des extrémités opposées chacune pourvue d'un élément (7) présentant pour chacune des mâchoires (3 et 4) une ouverture dans laquelle est positionnée une extrémité (5 ou 6) correspondante desdites mâchoires (3 ou 4) pour ainsi définir un pivot pour lesdites mâchoires (3 et 4).
- La paire de mâchoires (3 et 4) a des extrémités opposées (5 et 6) et montées de façon pivotante au bâti (1). Chacune des mâchoires ( 3 et 4) peut être déplacée entre une première et une seconde position distincte, la première position distincte, ou position ouverte, est représentée sur la figure 1 lorsque les mâchoires (3 et 4) sont à distance l'une de l'autre. La seconde position distincte, ou position fermée, étant définie lorsque les mâchoires (3 et 4) sont soit l'une contre l'autre comme représenté sur les figures 3 et 4, soit contre la patte P d'un animal A comme représenté à la figure 7. De préférence, comme illustré à la figure 1, chacune des mâchoires (3 et 4) est dépourvue d'aspérités et de dents. D'une façon particulièrement préférée, les mâchoires ont, comme illustré, une section transversale circulaire.
- Les premiers moyens connectés aux mâchoires pour les amener l'une vers l'autre comprennent de préférence, comme illustré, au moins un ressort de torsion (9), et de préférence comme illustré, deux, possédant chacun au moins une spire (11) et deux branches distinctes (13 et 15). Pour chaque ressort de torsion (9), la première branche (13) coopère avec un dispositif (17) tendant à faire pivoter conjointement les extrémités (5 et 6) appartenant à des mâchoires distinctes (3 et 4) pour que ces dernières soient déplacées vers la seconde position représentée Figure 2. La seconde branche (15) coopère quant à elle avec un dispositif comprenant un élément de retenue (19) solidaire du bâti (1).
   Le dispositif (17) peut de préférence, comme illustré, consister en quelques spires prévues à l'extrémité de la branche (13). D'une façon toute particulièrement préférée, l'enroulage de spires est traversé par des portions de mâchoires (3 et 4) situées de part est d'autre des ouvertures recevant les extrémités (5 et 6). D'une façon encore davantage préférée, les spires du dispositif (17) sont enroulées de bas en haut (comme illustrées) pour bénéficier au maximum de l'effet du ressort de torsion (9).
   Avantageusement les seconds moyens pour retenir au moins l'une des mâchoires en ladite première position, et les troisièmes moyens pour libérer la mâchoire desdits seconds moyens comprennent conjointement un logement (21) situé dans le bâti (1) et à l'intérieur duquel vient se loger une portion d'une mâchoire (4) lorsqu'elle se trouve dans la première position. Le logement (21) peut être obturé par une détente (23) connectée de façon pivotante au bâti (1), qui peut alors se déplacer entre deux positions distinctes à savoir une position fermée et une position ouverte. La position fermée qui obture le logement (21) et la position ouverte qui permet le dégagement de la mâchoire (4). Cette détente (23) est maintenue en position fermée par un élément (25) monté de façon pivotante au bâti (1) à l'aide d'une vis (26). Cet élément (25) comprend des extrémités opposées l'une définissant une butée (27) pour retenir la détente, l'autre comprenant un levier sur lequel est fixée une plaquette de détente (28) sur laquelle on peut agir pour faire pivoter la butée (27) et libérer la détente (23). La combinaison de la détente (23) et de l'élément (25) est comprise dans les moyens (ou troisièmes moyens) pour dégager la mâchoire (4) des seconds moyens.
- Un lacet (29), constitué préférentiellement d'un câble en acier, et ayant des extrémités opposées (31 et 37). L'une des extrémités (31) est solidaire d'un moyen de coulissement, notamment des moyens de coulissement (33) dotés de moyens anti-retour engagés par une portion intermédiaire du lacet pour former une boucle de serrage (35). Les moyens anti- retour sont avantageusement constitué d'une pièce de métal recourbée possédant deux ouvertures en regard mais formant un angle entre elles à travers desquelles passe le lacet. Une des extrèmités est fixée au dispositif anti-retour. L'autre extrémité (37) du lacet est, comme illustrée à la Figure 8, à fixer à un point d'ancrage. Dans un premier temps la boucle de serrage (35) est positionnée sous les mâchoires (3 et 4).
   Avantageusement, les quatrièmes moyens pour déconnecter les premiers moyens pour amener les mâchoires l'une vers l'autre lorsque l'on effectue une traction latérale sur les ressorts (9), consistent en un dispositif comprenant un élément de retenue (19) définissant avec le bâti (1) une gorge (36) pour recevoir la deuxième branche (15) du ressort de torsion (9). Cette gorge (36) a une ouverture suffisante pour permettre le passage de la branche (15) lorsque l'on exerce sur cette branche (15) une traction latérale, qui l'amène en contact avec un point appui situé sur la gorge (36) et la fait pivoter jusqu'à ce qu'elle soit dégagée de ladite gorge. De préférence ces quatrièmes moyens peuvent comprendre une portion intermédiaire du lacet (29), un anneau (30) engageant la spire (11) d'un des ressorts de torsion (9) et le dispositif comprenant l'élément de retenue (19) solidaire du bâti (1). La portion intermédiaire du lacet (29) passe au travers de l'anneau (30) du ressort de torsion (9) de sorte à exercer sur ce dernier une traction latérale, l'amener en contact avec un point appui situé sur la gorge (36) et la faire pivoter jusqu'à ce qu'elle soit dégagée de ladite gorge. Alternativement, comme illustré à la Figure 9, le lacet peut directement passer au travers d'une spire (11) du ressort de torsion (9). Ceci a toutefois pour conséquence de raccourcir l'effet de levier que peut avoir le lacet lorsque le dispositif est déplacé et que ledit lacet exerce une traction latérale sur le ressort de torsion (9) pour dégager la branche (13) de la gorge (36).
- Les cinquièmes moyens (39) servent à guider la boucle de serrage (35) le long des mâchoires (3 et 4) depuis un endroit situé sous les mâchoires (lorsque lesdites mâchoires sont en leur première position) et jusqu'en un point sur la patte de l'animal et situées au-delà desdites mâchoires lorsqu'elles sont refermées en leurs seconde position. De préférence ces cinquièmes moyens (39) pour guider la boucle de serrage (35) définissent un couloir (2) avec la mâchoire opposée à celle pouvant être logée dans le logement (21). Le collet est avantageusement disposé en partie dans ce couloir (2) comme illustré à la Figure 1.

Ces cinquièmes moyens (39) qui comprennent, comme illustré, un élément de guidage (38) ne sont de préférence solidaires que d'une des mâchoires. Tout particulièrement, ces cinquièmes moyens (39) et la mâchoire (3) d'avec laquelle ils sont solidaires ne forment préférentiellement qu'une seule pièce.

Alternativement, ces cinquièmes moyens peuvent être associés à des moyens de levage faisant partie des premiers moyens. Ainsi le lacet (29) peut être positionné au- dessus du dispositif (17), de préférence au-dessus des spires dudit dispositif (17) et être déplacé par engagement dudit dispositif (17) contre le lacet lors de la fermeture des mâchoires (3 et 4).

Pour actionner le dispositif selon l'invention il est avantageux de procéder comme suit :

Une première étape consiste à comprimer les ressorts (9); pour cela il est possible de procéder comme suit: il faut d'abord placer un objet quelconque entre les mâchoires (3 et 4) de façon à ce qu'elles restent entrouvertes. Il est possible d'utiliser tous types d'éléments comme une petite pièce de bois ramassée en forêt mais il est avantageux d'utiliser une pince à étau (43) ou "vise-grip", représentée sur la Fig. 2, pour immobiliser les mâchoires en position entrouverte. Il convient ensuite de manuellement comprimer les ressorts de torsion (9) en positionnant leurs branches (15) dans les gorges (36) comme illustré sur la Fig. 3 où un des deux ressorts est représenté comprimé tandis que le deuxième est représenté non comprimé. La Fig. 4 représente les deux ressorts en position de compression, les deux branches (15) étant engagées respectivement dans la gorge (36) associée.

Au cours de la deuxième étape, il convient tout d'abord de placer la boucle de serrage (35) sous la détente (23) avant d'ouvrir complètement les mâchoires (3 et 4). Une fois la mâchoire (3) dans le logement (21), il convient de le fermer en rabattant la détente (23) et en remontant la plaquette de détente (23) de manière à engager la butée (27) et immobiliser ladite détente (23). Le piège est ainsi armé et il convient de le manipuler avec beaucoup de soin et de précautions.

La troisième étape consiste à positionner correctement la partie du lacet (29) qui forme la boucle de serrage (35) dans le couloir (2) et à le positionner au-dessus de l'élément de guidage (38). Une fois le lacet mis en place, il doit être resserré et les moyens de coulissement anti -retour (33) positionné tel qu'indiqué sur ladite Fig. 1. Avantageusement l'anti recul est de marque Keeklock et est modifié (i.e. plié comme sur la Figure 1) de manière à pouvoir fonctionner pour une boucle de serrage de petit diamètre. Suivant le type d'animal piégé, il peut être avantageux de placer le lacet au travers d'une des spires d'un ressort, ou, comme illustré àla Figure 1, d'un anneau (30) associé à une spire du ressort, de manière à aider la désactivation du piège et à retrouver celui-ci. Cette procédure est avantageuse lorsqu'il s'agit de petits animaux ne possédant pas trop de force pour détériorer le piège. Si l'animal trappé est plus important, il est, au contraire plus avantageux que le piège ne reste pas attaché au lacet.

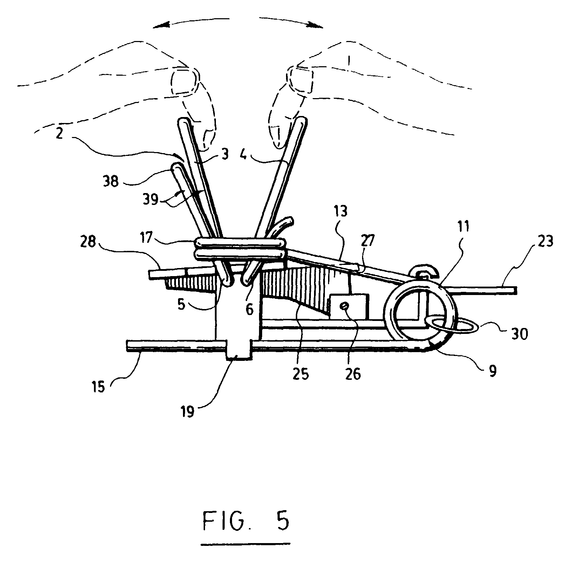

La quatrième étape consiste à écarter les mâchoires l'une de l'autre, comme indiqué à la Fig. 5, pour placer la mâchoire (4) dans le logement (21). Après avoir obturé ce logement (21) en positionnant la détente sous la butée (27), le piège est en état de fonctionner.

Il est préférable de disposer le piège sous la surface du sol (45), d'attirer l'animal à l'aide d'un appât (47). Il convient également de disposer le piège par rapport à l'appât de manière à ce que l'animal soit naturellement amené vers l'avant du piège. Ledit animal actionnant la palette de détente (28) refermera sur sa patte les mâchoires (3) et (4) tandis que la boucle de serrage (35) soulevé par le dispositif (17) sera guidé dans le couloir (2) et sur les mâchoires (3 et 4) jusqu'à ce qu'il soit positionné sur la patte de l'animal comme indiqué à la Fig. 7. En tentant de se dégager, l'animal resserrera le lacet autour de sa patte et déplacera suffisamment le piège pour faire subir aux ressorts une traction latérale qui délogeront les branches (15) des ressorts de torsion (9) de leur gorge de maintien (36). La patte de l'animal sera ainsi libérée des mâchoires mais maintenue fermement par le lacet (29). Pour ne pas blesser inutilement ledit animal, il convient de préférer un lacet ne possédant pas une section trop petite.

La Figure 8 présente une disposition particulière du piège dans laquelle le lacet (29) est ancré de façon temporaire. En effet pour assurer le resserrage rapide du lacet sur la patte de l'animal, il est avantageux que celui-ci soit ancré. Pour cela il est possible d'utiliser un piquet planté aussi près possible du piège. Le lacet est alors fixé au piquet à l'aide d'une agrafe. Une fois pris au piège, il est probable que l'animal arrache cette agrafe temporaire, mais la traction ainsi effectuée aura pour effet de resserrer ledit collet.

La Figures 8 présente également une manière d'effectuer l'ancrage principal du lacet. Avantageusement, l'extrémité du lacet est munie d'une virole qui peut s'adapter à l'oeillet d'un autre câble qui lui, serait fixé à un arbre.

Il est également possible que la virole soit fixée à une perche traînante ou soit dans l'oeillet d'un grappin.

Ce piège par exemple peut fonctionner enfoui dans le sol ou la neige ou encore dans l'eau.

Il est cependant avantageux que le piège soit enterré à 1.3 cm (1/2 pouce) de la surface du sol. Pour ce faire, il convient de repérer un terrain qui présente un obstacle naturel de manière à amener l'animal à approcher le piège par le devant. De tels obstacles peuvent être autant des dénivellations de terrain que des herbages, par exemple des herbages d'environ 30 cm (1 pied) de hauteur. Une fois le piège disposé, il est avantageux de recouvrir de sable fin l'arrière du piège jusqu'à la hauteur de l'élément 25 ainsi que des deux mâchoires (3 et 4). Il convient toutefois d'éviter de mettre du sable sous la plaquette de détente (28) de manière à ne pas gêner son fonctionnement. Il est également possible de recouvrir tout le piège avec des feuilles mortes et d'ajouter du sable sur ces feuilles afin de recouvrir tout le piège et que le terrain soit bien uniforme. Il est également possible d'utiliser un mouchoir en papier mais il n'est pas conseillé d'utiliser des tissus car ceci pourrait bloquer le mécanisme du piège.

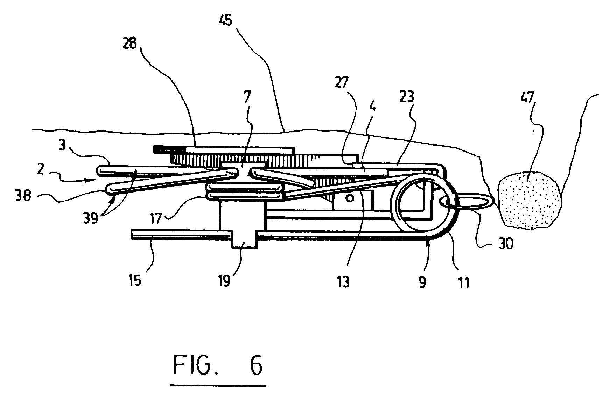

Du fait du dispositif particulier de ce piège, il est très avantageux de disposer l'appât près du piège, entre les deux ressorts, à une profondeur de 8 ou 10 cm (3 ou 4 pouces) tel que représenté Figure 6.

Si le piège gèle dans le sable, il est avantageux d'ajouter un type de sel fin, mais il existe aussi des produits sur le marché destinés à empêcher le sable de geler. Pour enlever toute odeur humaine, il est avantageux de sortir à l'extérieur tous les instruments servant au trappage durant une période qui peut aller jusqu'à 3 semaines, il est encore possible de les laisser quelques jours dans un ruisseau pour arriver au même résultat.

Avant la première utilisation, il convient de faire bouillir le piège dans de l'eau salée pour enlever tout résidu de fabrication comme il est bien connu de le faire pour tout piège neuf.

Ce piège peut convenir à un grand nombre d'animaux et notamment des mammifères et des carnassiers comme des renards, loups, coyotes, ours et autres.

Ce piège peut être fabriqué en tout matériau convenable comme des métaux mais il est plus préférablement fabriqué en acier. Il peut être obtenu par les moyens usuellement connus de l'homme du métier comme soudage, matricage, etc.

## Revendications

1. Dispositif pour la capture d'un animal, ledit dispositif comprenant en combinaison:
- un bâti (1);
- une paire de mâchoires (3 et 4) ayant des extrémités opposées (5 et 6) et montées de façon pivotante au bâti (1), chacune desdites mâchoires (3 et 4) pouvant être déplacée entre une première position distincte et une seconde position distincte, ladite première position étant définie lorsque lesdites mâchoires (3 et 4) sont à distance l'une de l'autre; ladite seconde position étant définie lorsque les mâchoires (3 et 4) sont contre une patte de l'animal à capturer;
- des premiers moyens connectés aux mâchoires (3 et 4) pour amener ces dernières l'une vers l'autre;
- des seconds moyens pour retenir au moins l'une des mâchoires (3 et 4) substantiellement en ladite première position;
- des troisièmes moyens pour libérer la ou les mâchoires (3 et 4) desdits seconds moyens;
- des quatrièmes moyens pour déconnecter les premiers moyens des mâchoires (3 et 4) et permettre à ces dernières de pouvoir librement se déplacer entre lesdites positions distinctes;
caractérisé en ce qui ledit dispositif comprend en outre des cinquièmes moyens pour guider une boucle de serrage depuis un endroit situé sous les mâchoires (3 et 4), lorsque lesdites mâchoires (3 et 4) sont en leur première position, jusqu'en un point situé sur la patte de l'animal à capturer et au-delà desdites mâchoires (3 et 4), lorsque lesdites mâchoires (3 et 4) soit en leur seconde position, et un lacet (29) ayant des extrémités (31 et 37) opposées, l'une desdites extrémités (31) étant solidaire de moyens de coulissement (33) engagés par une portion intermédiaire du lacet (29) pour former la boucle de serrage, l'autre extrémité (37) du lacet (29) étant à fixer à des moyens d'ancrage, ladite boucle de serrage étant positionnée sous les mâchoires (3 et 4) lorsque ces dernières sont en leur première position distincte.

2. Dispositif selon la revendication 1, caractérisé en ce que les cinquièmes moyens définissent une couloir (2) avec au moins une des mâchoires (3 et 4), la boucle de serrage étant disposée en partie dans ledit couloir.

3. Dispositif selon la revendication 1, caractérisé en ce que les cinquièmes moyens sont solidaires de la mâchoire (3).

4. Dispositif selon la revendication 3, caractérisé en ce que les cinquièmes moyens et la mâchoire (3) forment une seule pièce.

5. Dispositif selon la revendication 1, caractérisé en ce que les cinquièmes moyens comprennent, en outre des moyens de levage de la boucle de serrage (35), lesdits moyens de levage étant solidaires des premiers moyens.

6. Dispositif selon la revendication 1, caractérisé en ce que le bâti (1) présente une paire d'éléments (7) chacun pourvu d'au moins une ouverture où sont positionnées les extrémités (5 et 6) correspondantes des mâchoires (3 et 4) et ainsi définir pour chaque mâchoire (3 et 4) des pivots.

7. Dispositif selon la revendication 1, caractérisé en ce que le lacet (29) est un câble d'acier.

8. Dispositif selon la revendication 1, caractérisé en ce que les moyens de coulissement comprennent en outre des moyens anti-retour.

9. Dispositif selon la revendication 6, caractérisé en ce que les mâchoires (3 et 4) sont de section substantiellement circulaire.

10. Dispositif selon la revendication 9, caractérisé en ce que les mâchoires (3 et 4) sont en forme d'arc entre leurs pivots.

11. Dispositif selon la revendication 10, caractérisé en ce que les cinquièmes moyens comprennent en outre des moyens de levage de la boucle de serrage (35), lesdits moyens de levage comprenant le dispositif (17) des premiers moyens et pouvant lever la boucle de serrage (35) à une hauteur suffisante pour que celle-ci coopère avec la partie en forme d'arc des mâchoires (3 et 4) et que ladite boucle de serrage (35) glisse sur ladite partie des mâchoires (3 et 4) et se positionne sur la patte de l'animal.

12. Dispositif selon la revendication 1, caractérisé en ce que les premiers moyens comprennent au moins un ressort de torsion (9) possédant au moins une spire (11) et deux branches distinctes (13 et 15), la première branche (13) coopérant avec un dispositif pour faire pivoter conjointement les mâchoires (3 et 4) autour des pivots comprenant les extrémités (5 et 6) des mâchoires vers la seconde position, la seconde branche (15) coopérant avec un dispositif de retenue solidaire du bâti (1).

13. Dispositif selon la revendication 10, caractérisé en ce que les quatrièmes moyens comprennent dans le dispositif de retenue solidaire au bâti (1), un élément (19) définissant avec le bâti (1) une gorge (36) pour recevoir la deuxième branche (15) du ressort de torsion (9), ladite gorge (36) ayant une ouverture suffisante pour permettre le passage latéral de ladite branche (15), et au moins un point d'appui pour permettre de faire latéralement pivoter par rapport audit point d'appui, la branche (15) jusqu'à ce qu'elle soit dégagée de ladite gorge (36).

14. Dispositif selon la revendication 1, caractérisé en ce que les moyens pour retenir les mâchoires (3 ou 4) comprennent un logement (21) dans le bâti (1) et à l'intérieur duquel vient se loger une portion d'une des mâchoires (3 et 4) lorsqu'elle se trouve dans la première position, ledit logement (21) étant obturé par une détente (23) montée de façon pivotante au bâti (1), ladite détente (23) pouvant adopter deux positions distinctes, l'une desdites positions étant une positions fermée obturant le logement (21) et l'autre desdites positions étant une position ouverte permettant le dégagement de la mâchoire (3 ou 4), ladite détente (23) étant retenue en position fermée par un élément (25) monté de façon pivotante au bâti (1), ledit élément (25) comprenant des extrémités opposées, l'une desdites extrémités définissant une butée (27) pour retenir la détente (23) en sa position fermée, l'autre de ces extrémités comprenant une plaquette de détente (28) sur laquelle l'animal à capturer peut agir pour faire pivoter l'élément (25), déplacer la butée (28) et libérer la détente (23).

15. Dispositif selon la revendication 1, caractérisé en ce que les premiers moyens sont doubles et respectivement disposés pour coopérer avec des extrémités (5 et 6) correspondantes des mâchoires (3 et 4), et en ce que pour chacun des premiers moyens des quatrièmes moyens correspondants lui sont associés.

16. Dispositif selon la revendication 15, caractérisé en ce que les quatrièmes moyens comprennent en outre un anneau engageant le ou les spires d'un des ressorts de torsion (9) et au travers duquel le câble d'acier (29) est engagé de manière à permettre, par effet de levier, un dégagement plus aisé de la branche (15) dudit ressort de torsion (9).

17. Dispositif selon l'une quelconque des revendications 1 à 16, caractérisé en ce que
- la paire de mâchoires (3 et 4) présente une forme arrondie et de section substantiellement circulaire;
- le bâti (1) présente une paire d'éléments (7) qui sont chacun pourvus d'une ouverture où sont positionnées les extrémités (5 et 6) correspondantes des mâchoires (3 et 4) pour ainsi définir pour chacune des mâchoires (3 et 4) des pivots;
- les premiers moyens comprennent deux ressorts de torsion (9) possédant chacun au moins une spire (11) et deux branches distinctes (13 et 15), pour chaque ressort de torsion (9), la première branche (13) coopérant avec un dispositif (17) pour faire pivoter conjointement les extrémités des mâchoires (3 et 4) vers la seconde position, la seconde branche coopérant avec un dispositif de retenue solidaire du bâti (1);
- les seconds moyens retiennent au moins la mâchoire (3) substantiellement en ladite première position;
- lesdits seconds et troisièmes moyens comprennent conjointement un logement (21) situé dans le bâti (1) et à l'intérieur duquel vient se loger une portion de la mâchoire (3), lorsqu'elle se trouve dans la première position, ledit logement (21) étant obturé par une détente (23) montée de façon pivotante au bâti (1), ladite détente (23) pouvant adopter deux positions distinctes, l'une desdites position étant une position fermée obturant le logement (21) et l'autre desdites positions étant une position ouverte permettant le dégagement de la mâchoire (3 et 4), ladite détente (23) étant retenue en position fermée par un élément (25) monté de façon pivotante au bâti (1), ledit élément (25) comprenant des extrémités opposées, l'une desdites extrémités définissant une butée (27) pour retenir la détente (23) en sa position fermée, l'autre de ces extrémités comprenant une plaquette de détente (28) sur laquelle l'animal à capturer peut agir pour faire pivoter l'élément (25), déplacer la butée (27) et libérer la détente (23);
- les quatrièmes moyens pour déconnecter les ressorts de torsion (9) et partant lesdits premiers moyens, des mâchoires (3 et 4), lesdits quatrièmes moyens comprenant dans le dispositif de retenue solidaire au bâti (1), un élément (19) définissant avec le bâti (1) une gorge (36) pour recevoir la deuxième branche (15) du ressort de torsion (9), ladite gorge (36) ayant une ouverture suffisante pour permettre le passage latéral de ladite branche (15), et au moins un point d'appui pour permettre de faire latéralement pivoter par rapport audit point d'appui la banche (15) jusqu'à ce qu'elle soient dégagée de ladite gorge (36);
- des cinquièmes moyens comprennent un élément (39) solidaire de la mâchoire (3) opposée à celle pouvant être logée dans le logement (21) du bâti (1), ledit élément (39) formant une pièce unique avec la mâchoire (3) et définissant avec ladite mâchoire (3) un élément de guidage pour diriger temporairement la boucle de serrage (35);
- le lacet est un câble d'acier; et
- les moyens de coulissement sont dotés de moyens anti-retour (33);

18. Dispositif selon la revendication 17, caractérisé en ce que les cinquième moyens comprennent en outre des moyens de levage de la boucle de serrage (35), lesdits moyens de lavage comprenant un dispositif (17), desdits ressorts de torsion (9) pour lever la boucle de serrage (35) à une hauteur suffisante pour que celle-ci coopère avec la partie en forme d'arc des mâchoires (3 et 4) pour que ladite boucle de serrage (35) glisse sur ladite partie des mâchoires (3 et 4) et se positionner sur la patte de l'animal.

19. Dispositif selon la revendication 17, caractérisé en ce que les quatrièmes moyens comprennent en outre un anneau engageant le ou les spires d'un des ressorts de torsion (9) et au travers duquel le câble d'acier (29) est engagé de manière à permettre, par effet de levier, un dégagement plus aisé de la branche (15) dudit ressort de torsion (9).

## Claims

1. Device for catching an animal, said device comprising in combination:
- a frame (1);
- a pair of jaws (3 and 4) having opposite ends (5 and 6) and being pivotally mounted to the frame (1), each of the jaws being movable between a first distinct position and a second distinct position, said first position being defined when the jaws (3 and 4) are at a distance from each other; said second position being defined when the jaws (3 and 4) are against the leg of the animal to be caught;
- first means connected to the jaws (3 and 4) for bringing these latter one towards the other;
- second means for retaining at least one of the jaws (3 and 4) substantially in said first position;
- third means for freeing the jaw or the jaws (3 and 4) from said second means;
- fourth means for disconnecting the first means from the jaws (3 and 4) and allowing these latter to freely move between said distinct positions;
characterised in that said device further comprises fifth means for guiding a tightening loop from a place located under the jaws (3 and 4) when said jaws (3 and 4) are in their first position, to a spot placed on the leg of the animal to catch and beyond said jaws (3 and 4), when said jaws (3 and 4) are in their second position, and a lace (29) having opposite ends (31 and 37), one of said ends (31) being solid with sliding means (33) engaged by an intermediary portion of the lace (29) to form the tightening loop, the other end (37) of the lace (29) being fixed to anchoring means, said tightening loop being positioned under the jaws (3 and 4) when the latter are in their first distinct position.

2. Device according to claim 1, characterised in that the fifth means define a corridor (2) with at least one of the jaws (3 and 4), the tightening loop being partially laid out within said corridor.

3. Device according to claim 1, characterised in that the fifth means are solid with the jaw (3).

4. Device according to claim 3, characterised in that the fifth means and the jaw (3) form a single piece.

5. Device according to claim 1, characterised in that the fifth means further comprises means for lifting the tightening loop (35), said lifting means being solid with the first means.

6. Device according to claim 1, characterised in that the frame (1) has a pair of members (7) each provided with at least one opening where are positioned the corresponding ends (5 and 6) of the jaws (3 and 4) to define pivots for each jaw (3 and 4).

7. Device according to claim 1, characterised in that the lace (29) is a steel wire.

8. Device according to claim 1, characterised in that the sliding means further comprises non-return means.

9. Device according to claim 6, characterised in that the jaws (3 and 4) are of substantially circular cross-section.

10. Device according to claim 9, characterised in that the jaws (3 and 4) are each on the form of an arc between their pivots.

11. Device according to claim 10, characterised in that the fifth means further comprises means for lifting the tightening loop (35), said lifting means comprising the device (17) of the first means and being able to lift the tightening loop (35) at a height sufficient so that it cooperates with the part of the jaws (3 and 4) having the form of an arc and that said tightening loop (35) slides on said part of the jaws (3 and 4) and position itself on the leg of the animal.

12. Device according to claim 1, characterised in that the first means comprises at least one torsion spring (9) possessing at least one spiral (11) and two distinct branches (13 and 15), the first branch (13) cooperating with a device for jointly pivoting the jaws (3, 4) around the pivots comprising the ends (5, 6) of the jaws toward the second position, the second branch (15) cooperating with a retaining device solid with the frame (1).

13. Device according to claim 10, characterised in that the fourth means comprises, within the retaining device solid with the frame (1), a member (19) defining with the frame (1) a groove (36) for receiving the second branch (15) of the torsion spring (9), said groove (36) having an opening sufficient to allow a lateral passage of said branch (15), and at least one support point to allow lateral pivot of the branch (15) in relation to the support point, until it is released from said groove (36).

14. Device according to claim 1, characterised in that the means for retaining the jaws (3 or 4) comprises a housing (21) in the frame (1) and inside which is lodged a portion of one of the jaws (3 and 4) when it is located in the first position, said housing (21) being closed by a trigger (23) pivotally mounted to the frame (1), said trigger (23) being able to take two distinct positions, one of these positions being a closed position for closing the housing (21) and the other of these positions being an open position for allowing the release of the jaw (3 or 4), said trigger (23) being retained in closed position by a lever (25) pivotally mounted to the frame (1), said lever (25) comprising opposite ends, one of these ends defining a stopper (27) for retaining the trigger (23) in its closed position, the other of these ends comprising a trigger plate (28) on which the animal to be caught may act to pivot the lever (25), move the stopper (28) and free the trigger (23).

15. Device according to claim 1, characterised in that the first means are double and respectively laid out to cooperate with the corresponding ends (5 and 6) of the jaws (3 and 4), and in that each of the first means is associated with a corresponding fourth means.

16. Device according to claim 15, characterised in that the fourth means further comprises a ring engaging the spiral(s) of one of the torsion springs (9) and through which the steel wire (29) is engaged in a manner to permit, by lever effect, an easier release of the branch (15) of said torsion spring (9).

17. Device according to anyone of claims 1 to 16, characterised in that:
- the pair of jaws (3 and 4) has a curved form and a substantially circular cross-section;
- the frame (1) has a pair of members (7) which are each provided with an opening where are positioned the corresponding ends (5 and 6) of the jaws (3 and 4) in order to define pivots for each of the jaws (3 and 4);
- the first means comprises two torsion springs (9) each having at least one spiral (11) and two distinct branches (13 and 15), for each torsion spring (9), the first branch cooperating with a device (17) for jointly pivoting the ends of the jaws (3 and 4) towards the second position, the second branch cooperating with a retaining device firmly attached to the frame (1);
- the second means retains at least the jaw (3) substantially in said first position;
- said second and third means together comprise a housing (21) located in the frame (1) and inside which is lodged a portion of the jaw (3), when it is located in the first position, said housing (21) being closed by a trigger (23) pivotally mounted to the frame (1), said trigger (23) having two distinct positions, one of these positions being a closed position for closing the housing (21) and the other of these positions being an open position for allowing release of the jaw (3 and 4), said trigger (23) being retained in closed position by a lever (25) pivotally mounted to the frame (1), said lever (25) comprising opposite ends, one of the ends defining a stopper (27) for retaining the trigger (23) in its closed position, the other of these ends comprising a release plate (28) on which the animal to be caught may act to pivot the lever (25), move the stopper (27) and free the trigger (23);
- the fourth means for disconnecting the torsion springs (9) and accordingly said first means from the jaws (3 and 4), comprises, within the retaining device solid with the frame (1), a member (19) defining with the frame (1) a groove (36) for receiving the second branch (15) of the torsion spring (9), said groove (36) having an opening sufficient to allow the lateral passage of said branch (15), and at least one support point to allow lateral pivot of the branch (15) in relation to the support point, until that it is released from said groove (36);
- the fifth means comprising a member (39) firmly attached to the jaw (3) opposed to the one which could be lodged in the housing (21) of the frame (1), said member (39) being integral to the jaw (3) and defining with said jaw (3) a guiding member to temporarily guiding the tightening loop (35);
- the lace is a steel wire; and
- the sliding means are provided with non-return means.

18. Device according to claim 17, characterised in that the fifth means further comprises means for lifting the tightening loop (35), said lifting means comprising a device (17), said torsion springs (9) to lift the tightening loop (35) at a height sufficient so that it cooperates with the part of the jaws (3 and 4) having the form of an arc and that said tightening loop (35) slides on said part of the jaws (3 and 4) and position itself on the leg of the animal.

19. Device according to claim 17, characterised in that the fourth means further comprises a ring engaging the spiral(s) of one of the torsion springs (9) and through which the steel wire (29) is engaged in a manner to permit, by lever effect, an easier release of the branch (15) of said torsion spring (9).

## Patentansprüche

1. Vorrichtung für den Tierfang, welche eine Kombination umfasst von :
- einem Rahmen (1);
- einem Paar Backen (3 und 4) mit schwenkbar an dem Rahmen (1) angebrachten entgegengesetzten Enden (5 und 6), wobei jede dieser Backen (3 und 4) zwischen einer ersten bestimmten Stellung und einer zweiten bestimmten Stellung beweglich ist, wobei die erste Stellung dadurch definiert ist, daß die Backen (3 und 4) voneinander beabstandet sind und die zweite Stellung dadurch definiert ist, daß die Backen (3 und 4) am Bein des zu fangenden Tieres anliegen;
- erste Mittel, welche mit den Backen (3 und 4) verbunden sind, um letztere zueinander zu führen;
- zweite Mittel, um mindestens eine des Backen (3 und 4) im wesentlichen in der ersten Stellung zurückzuhalten;
- dritte Mittel, um die Backe(n) (3 und 4) von den zweiten Mitteln freizugeben;
- vierte Mittel, um die ersten Mittel von den Backen (3 und 4) zu trennen und letztere zwischen den bestimmten Stellungen frei beweglich zu machen;
gekennzeichnet dadurch, daß die Vorrichtung weiter fünfte Mittel aufweist, um eine zuziehbare Schlinge von einem Ort, welcher sich unter den Backen (3 und 4) befindet, wenn die Backen (3 und 4) in ihrer ersten Stellung sind, bis zu einem am Bein des zu fangenden Tieres befindlichen Punkt und über die Backen (3 und 4) hinaus zu führen, wenn die Backen (3 und 4) in ihrer zweiten Stellung sind, und ein Band (29) mit entgegengesetzten Enden (31 und 37), wobei das eine Ende (31) kraftschlüssig mit den Gleitführungsmitteln (33) verbunden ist, welche unter Zusammenwirken mit einem mittleren Teil des Bandes (29) die zuziehbare Schlinge bilden, und das andere Ende (37) des Bandes (29) an Ankermitteln anzubringen ist, wobei die zuziehbare Schlinge sich unter den Backen (3 und 4) befindet, wenn sich letztere in ihrer ersten bestimmten Stellung befinden.

2. Vorrichtung gemäß Anspruch 1, gekennzeichnet dadurch, daß die fünften Mittel mit mindestens einer des Backen (3 und 4) eine Durchführung (2) bildet, wobei die zuziehbare Schlinge teilweise in der Durchführung angeordnet ist.

3. Vorrichtung gemäß Anspruch 1, gekennzeichnet dadurch, daß die fünften Mittel mit der Backe (3) kraftschlüssig verbunden sind.

4. Vorrichtung gemäß Anspruch 3, gekennzeichnet dadurch, daß die fünften Mittel mit der Backe (3) einstückig sind.

5. Vorrichtung gemäß Anspruch 1, gekennzeichnet dadurch, daß die fünften Mittel weiter Mittel zum Heben der zuziehbare Schlinge (35) aufweisen, wobei die Hebemittel mit den ersten Mittel kraftschlüssig verbunden sind.

6. Vorrichtung gemäß Anspruch 1, gekennzeichnet dadurch, daß der Rahmen (1) ein Paar Elemente (7) aufweist, welche jeweils mit mindestens einer Öffnung versehen sind, in welcher die entsprechenden Enden (5 und 6) der Backen (3 und 4) angeordnet sind, und derart für jede Backe (3 und 4) Schwenkachsen definieren.

7. Vorrichtung gemäß Anspruch 1, gekennzeichnet dadurch, daß das Band (29) ein Stahlkabel ist.

8. Vorrichtung gemäß Anspruch 1, gekennzeichnet dadurch, daß die Gleitführmittel weiter Rücklaufsicherungsmittel aufweisen.

9. Vorrichtung gemäß Anspruch 6, gekennzeichnet dadurch, daß die Backen (3 und 4) einen im wesentlichen kreisförmigen Querschnitt aufweisen.

10. Vorrichtung gemäß Anspruch 9, gekennzeichnet dadurch, daß die Backen (3 und 4) zwischen ihren Schwenkachsen bogenförmig sind.

11. Vorrichtung gemäß Anspruch 10, gekennzeichnet dadurch, daß die fünften Mittel weiter Mittel zum Heben der zuziehbaren Schlinge (35) umfassen, wobei die Hebemittel die Vorrichtung (17) der ersten Mittel umfassen und die zuziehbare Schlinge (35) auf eine Höhe heben können, die ausreichend ist, damit diese mit dem gebogenen Teil der Backen (3 und 4) zusammenwirkt und damit die zuziehbare Schlinge (35) über diesen Teil der Backen (3 und 4) gleitet und am Bein des Tieres anliegt.

12. Vorrichtung gemäß Anspruch 1, gekennzeichnet dadurch, daß die ersten Mittel mindestens eine Torsionsfeder (9) mit mindestens einer Windung (11) und zwei verschiedenen Ästen (13 und 15) umfassen, wobei der erste Ast (13) mit einer Vorrichtung zusammenwirkt, um die Backen (3 und 4) gemeinsam um die die Backenenden (5 und 6) umfassenden Schwenkachsen in die zweite Stellung zu schwenken, und der zweite Ast (15) mit einer mit dem Rahmen (1) kraftschlüssig verbundenen Rückhaltevorrichtung zusammenwirkt.

13. Vorrichtung gemäß Anspruch 10, gekennzeichnet dadurch, daß die vierten Mittel in der kraftschlüssig mit dem Rahmen (1) verbundenen Rückhaltevorrichtung ein Element (19) umfassen, das mit dem Rahmen (1) eine Kehle (36) zur Aufnahme des zweiten Asts (15) der Torsionsfeder (9) definiert, wobei diese Kehle (36) eine für die seitliche Durchführung des Astes (15) ausreichende Öffnung hat, und mindestens einen Stützpunkt aufweist, um das seitliche Schwenken des Astes (15) bezüglich des Stützpunkts zu erlauben, bis dieser aus der Kehle (36) freigesetzt ist.

14. Vorrichtung gemäß Anspruch 1, gekennzeichnet dadurch, daß die Mittel zum Zurückhalten der Backen (3 oder 4) im Rahmen (1) eine Aufnahme (21) umfassen, dessen Inneres einen Teil von einer der Backen (3 und 4) aufnimmt, wenn diese in der ersten Stellung ist, wobei die Aufnahme (21) durch eine schwenkbar am Rahmen angebrachte Rückfederung (23) verdeckt wird, welche zwei verschiedene Stellungenn einnehmen kann, von denen eine die die Aufnahme (21) verdeckende geschlossene Stellung, und die andere die die Freigabe der Backe (3 oder 4) ermöglichende ist, wobei die Rückfederung (23) durch ein schwenkbar am Rahmen befestigtes Element (25) in der geschlossenen Stellung zurückgehalten wird, wobei dieses Element (25) entgegengesetzte Enden aufweist, von denen ein Ende einen Anschlag (27) zum Zurückhalten der Rückfederung (23) in dessen geschlossenen Stellung definiert, und das andere Ende eine Rückfederungsplatte (28) umfasst, welche das zu fangende Tier auslösen kann, um das Element (25) zu schwenken, den Anschlag (27) zu verschieben und die Rückfederung (23) freizugeben.

15. Vorrichtung gemäß Anspruch 1, gekennzeichnet dadurch, daß die ersten Mittel doppelt sind und jeweils so angeordnet sind, daß sie mit den entsprechenden Enden (5 und 6) der Backen (3 und 4) zusammenwirken und daß jedem der ersten Mittel entsprechende vierte Mittel zugeordnet sind.

16. Vorrichtung gemäß Anspruch 15, gekennzeichnet dadurch, daß die vierten Mittel weiter einen Ring umfassen, der mit den Windung(en) einer Torsionsfeder (9) zusammenwirkt und durch den das Stahlkabel (29) führt, wodurch der Ast (15) der Torsionsfeder (9) durch Hebelwirkung leichter freigebbar ist.

17. Vorrichtung gemäß mindestens einer der Ansprüche 1 bis 16, gekennzeichnet dadurch, daß
- das Paar Backen (3 und 4) eine gerundete Form und einen im wesentlichen kreisförmigen Querschnitt aufweisen;
- der Rahmen (1) ein Paar Elemente (7) aufweist, welche jeweils mit einer Öffnung versehen sind, in welcher die entsprechenden Enden (5 und 6) der Backen (3 und 4) angeordnet sind, und derart für jede der Backen (3 und 4) Schwenkachsen definieren ;
- die ersten Mittel zwei Torsionsfedern (9) mit jeweils mindestens einer Windung (11) und zwei verschiedenen Ästen (13 und 15) für jede Torsionsfeder (9) umfassen, wobei der erste Ast (13) mit einer Vorrichtung (17) zusammenwirkt, um die Enden der Backen (3 und 4) gemeinsam in die zweite Stellung zu schwenken, und der zweite Ast mit der mit dem Rahmen (1) fest verbundenen Rückhaltevorrichtung zusammenwirkt ;
- die zweiten Mittel mindestens die Backe (3) im wesentlichen in der ersten Stellung zurückhalten ;
- die zweiten und dritten Mittel gemeinsam eine im Rahmen (1) befindliche Aufnahme (21) umfassen, dessen Inneres einen Teil der Backe (3) aufnimmt, wenn diese in der ersten Stellung ist, wobei die Aufnahme (21) von einer durch eine schwenkbar am Rahmen (1) angebrachte Rückfederung (23) verdeckt wird, welche zwei verschiedene Stellungen einnehmen kann, von denen eine die die Aufnahme (21) verdeckende geschlossene Stellung, und die andere Stellung die die Freigabe der Backen (3 und 4) erlaubende Stellung ist, wobei die Rückfederung (23) durch ein schwenkbar am Rahmen befestigtes Element (25) in der geschlossenen Stellung zurückgehalten wird, wobei dieses Element (25) entgegengesetzte Enden aufweist, von denen ein Ende einen Anschlag (27) zum Zurückhalten der Rückfederung (23) in dessen geschlossenen Stellung definiert, und das andere Ende eine Rückfederungsplatte (28) umfasst, welche das zu fangende Tier auslösen kann, um das Element (25) zu schwenken, den Anschlag (27) zu verschieben und die Rückfederung (23) freizugeben ;
- die vierten Mittel, um die Torsionsfedern (9) und entsprechend die ersten Mittel von den Backen (3 und 4) zu trennen, wobei die vierten Mittel in der am Rahmen (1) fest angebrachten Rückhaltevorrichtung ein Element (19) umfassen, das mit dem Rahmen (1) eine Kehle (36) zur Aufnahme des zweiten Asts (15) der Torsionsfeder (9) definiert, wobei die Kehle (36) eine für die seitliche Durchführung des Astes (15) ausreichende Öffnung hat und mindestens einen Stützpunkt aufweist, um das seitliche Schwenken des Astes (15) bezüglich des Stützpunkte zu erlauben, bis dieser aus der Kehle (36) freigesetzt ist ;
- die fünften Mittel ein Element (39) umfassen, das fest mit der Backe (3) verbunden ist, welche derjenigen, die in der Aufnahme (21) des Rahmens (1) aufnehmbar ist, entgegengesetzt ist, wobei das Element (39) mit der Backe (3) einstückig ist und mit der Backe (3) ein Führungselement für die zeitweilige Führung der zuziehbaren Schlinge (35) definiert ;
- das Band ein Stahlkabel ist ; und
- die Gleitführungsmittel mit Rückdrehsicherungsmitteln versehen sind.

18. Vorrichtung gemäß Anspruch 17, gekennzeichnet dadurch, daß die fünften Mittel weiter Mittel zum Heben der zuziehbaren Schlinge (35) umfassen, welche eine Vorrichtung (17) der Torsionsfedern (9) umfassen für das Heben der zuziehbare Schlinge (35) auf eine Höhe, die ausreichend ist, damit diese mit dem gebogenen Teil der Backen (3 und 4) zusammenwirkt und damit die zuziehbare Schlinge (35) über diesen Teil der Backen (3 und 4) gleitet und am Bein des Tieres anliegt.

19. Vorrichtung gemäß Anspruch 17, gekennzeichnet dadurch, daß die vierten Mittel weiter einen Ring umfassen, der mit den Windung(en) von einer der Torsionsfedern (9) zusammenwirkt und durch den das Stahlkabel (29) führt, wodurch der Ast (15) der Torsionsfeder (9) durch Hebelwirkung leichter freigebbar ist.
